# EUROPEAN PATENT SPECIFICATION

(11) **EP 2 476 309 B1**
(45) Date of publication and mention of the grant of the patent: **31.07.2013**
(21) Application number: 12150494.8
(22) Date of filing: 09.01.2012
(51) Int. Cl.: A01K 31/04, A01B 33/16, A01B 33/02

(54) **A work machine for preparing and treating bedding in bird farms**
Arbeitsmaschine zur Herstellung und Behandlung der Einstreu in Vogelfarmen
Machine de travail pour préparer et traiter la litière pour volaillers

(30) Priority: 17.01.2011 IT RE20110002
(43) Date of publication of application: 18.07.2012
(73) Proprietor: Carboni, Renzo, 42022 Boretto (Reggio Emilia) (IT)
(72) Inventor: Carboni, Renzo, 42022 Boretto (Reggio Emilia) (IT)
(74) Representative: Corradini, Corrado

(56) References cited:
- EP-A2- 2 071 944
- WO-A2-2007/031976
- US-A- 3 892 278
- US-A- 5 287 934

## Description

The invention relates to a machine for treating bedding in animal farming, and in particular bird farms

In more detail, the invention relates to a machine for mincing straw directly on the bedding on the floors of sheds, for the preparation of fowl bedding, as well as the treatment thereof during the whole chicken or turkey raising cycle, or other similar animals destined for meat production.

In the most widely-used systems for fowl raising, the animals are raised internally of large sheds, which can stretch to even longer than 200 metres and can be between 10 and 15 metres wide. Mangers are arranged internally of these sheds, parallel to the longitudinal walls of the shed, and distant therefrom by 2.5 to 5 metres such as to leave two aisles adjacent to the walls and a central aisle between the mangers, for passage of the operators.

The sheds are destined to contain about from for to fifteen animals per square metre, and several thousands of animals can be stationed in a single shed.

The floor of the sheds is generally made of concrete, and occasionally earth. Before putting the new-born animals in the sheds, a layer of sawdust, rice husks or straw is usually spread on the floor of the shed, on which the animals grow and where their excrement gradually builds up.

The accumulation of excrement is greater near the mangers, and reaches a thickness of up to 30 centimetres at the end of the chicken-raising cycle. As there is much liquid in the excrement, and as the animals walk continuously thereon, the bedding tends to harden and become impermeable, which might lead to the formation of puddles or very damp areas.

These phenomena can become a threat to the health of the animals.

Apart from the pollution caused by the presence of damp zones, and the drawbacks that arise for the animals' health, the hardening of the bedding is at the origin of a further phenomenon which causes considerable damage to the farmers.

Following intensive feeding, the increase in the animals' weight is not equal to the reinforcement of their bone structure, and towards the end of the cycle the large animals, for example turkeys, reach a weight which cannot be sustained by the skeleton. In particular, when the animals lie down to rest, and the bedding is very hard, it is quite possible that their sternum will break. To obviate these drawbacks a machine is known which comprises means for detaching and raising the bedding from the floor, and for supplying the layer of thus-raised bedding to special mincing means, from which the minced material is launched towards sifting means.

The mincing means generally comprise a rotating shaft on which a plurality of milling tools are keyed, singly provided with a keying flange, on which radial blades are fixed, orientated perpendicularly to the axis of the shaft and having the ends folded parallel thereto.

The rotary shaft is rotatingly coupled to lateral flanks of a bearing structure, which is substantially conformed as a hood for covering the milling tools, such as to prevent the minced material from being projected randomly into the surrounding space.

The means for detaching and raising the bedding comprise a scraping blade, which is orientated parallel to the rotating shaft and is positioned there-below, at a position which is such as not to interfere with the milling tools.

During advancement of the work machine on the terrain, the scraping blade detaches the hard and dry bedding from the floor, raising it up to bringing it to the milling tools.

The milling tools are rotated in an opposite direction to the advancement direction of the work machine such that as well as mincing the material they have the function of turning over the bedding and launching the minced material towards the sifting means, which are posteriorly positioned.

The action exerted by the work machine is such as to break, move and then mince the hardened bedding, creating a more comfortable environment, dry and clean, for the animal, with an obvious benefit for the farmer. It also involves advantages in terms of costs and quality of the management of the production cycle, and further reduces the risks of infection, and improves the working conditions for the operatives working in the animal rearing sheds.

A drawback of the work machine is however that it can be used only with bedding made of wooden sawdust or rice husks, while it is not possible to use it with bedding made of straw or like products having, in general, a filament shape.

Straw tends to wind about the rotary shaft bearing the milling tools and to accumulate between the rotary shaft and the upper containing wall. These build-ups of straw do not enable correct mincing of the bedding, and lead to progressive clogging and halting of the rotor.

To obviate this drawback the present Applicant developed a machine, described in patent application EP 2 071 944, which enabled the above-mentioned drawback in the prior art to be obviated, by providing a work machine of the above-delineated type, which could be effectively applied in mincing layers of straw on the ground, thus enabling preparation of the straw bedding without the aid of very expensive dedicated straw-mincing machines, used only for a few days each year.

However, though avoiding the formation of accumulations of straw in proximity of the milling tools and the upper containing structure, the known-type machine described above exhibits the drawback, of no less importance, of mincing only a small part of the raised straw, causing the machine to block.

It has been observed that the straw raised by the milling tools, if not adequately minced, accumulates internally of the bearing structure and is not efficiently cut up by the tools provided for the purpose.

An aim of the present invention is therefore to make the chopping-up of the straw and the like constituting the bedding in animal farms more efficient and functional, as well as enabling distribution thereof in a way which is substantially uniform on the treated terrain.

An efficient chopping action on the straw contributes to regenerating the straw or mixed-type bedding, such that it is similar to any other sawdust, rice husk or pineapple husk bedding and suitable for preventing lesions to the paws or claws of the animals.

A further aim of the invention is to attain the above-mentioned objective with a simple, rational and relatively inexpensive solution.

The aims are attained by the invention thanks to the characteristics reported in the independent claim. The dependent claims delineate preferred and/or particularly advantageous aspects of the invention.

In particular, a work machine is provided for treating bedding in animal farming, comprising a rotary shaft on which at least a milling tool is keyed, a bearing structure destined at least partly to cover the rotary shaft and the milling machine, and a scraping blade located below the rotary shaft for scraping and raising the material located in the zone underlying the milling tool, the milling tool being provided with cutter blades that project radially from the rotary shaft and are, at ends thereof, bent parallel to the shaft. According to the invention, the machine comprises at least a counter-blade destined to contact the folded end of the blades and fixed to the bearing structure on an opposite side of the scraping blade with respect to the rotary shaft.

The counter-blade further comprises shaped appendages developing at least partially in the hollow space between the blades of the at least a milling machine.

In this way, the counter-blade, being located in the front zone of the bearing structure with, for example, the shaped appendages located in the hollow space of the milling machine, imparts a homogeneous scissor-like cutting action on the straw which enables the straw to be efficiently minced before being sent internally of the work machine and thus being cut very short before entering, and preventing any blocking.

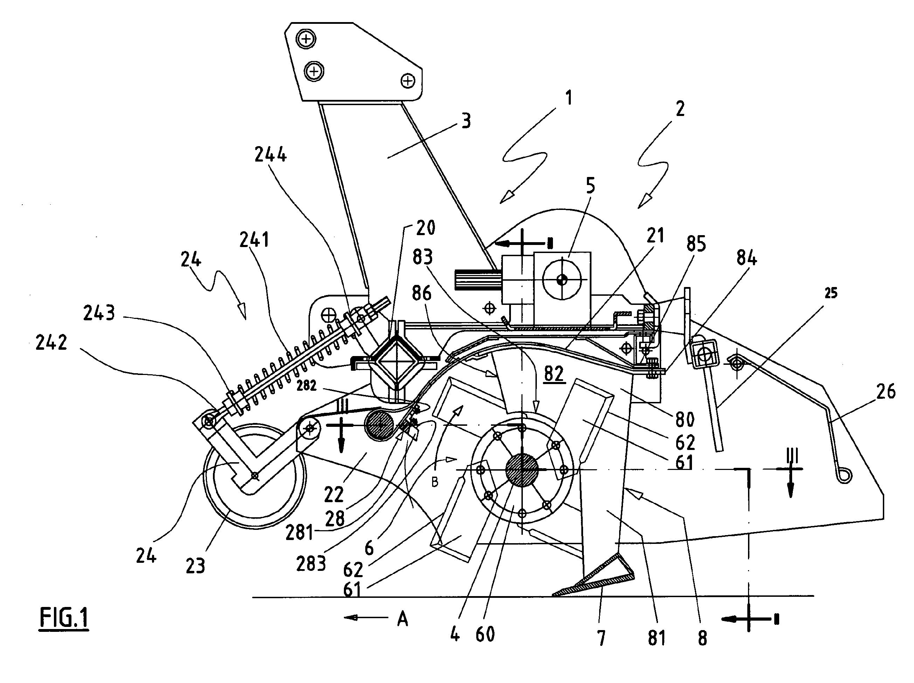

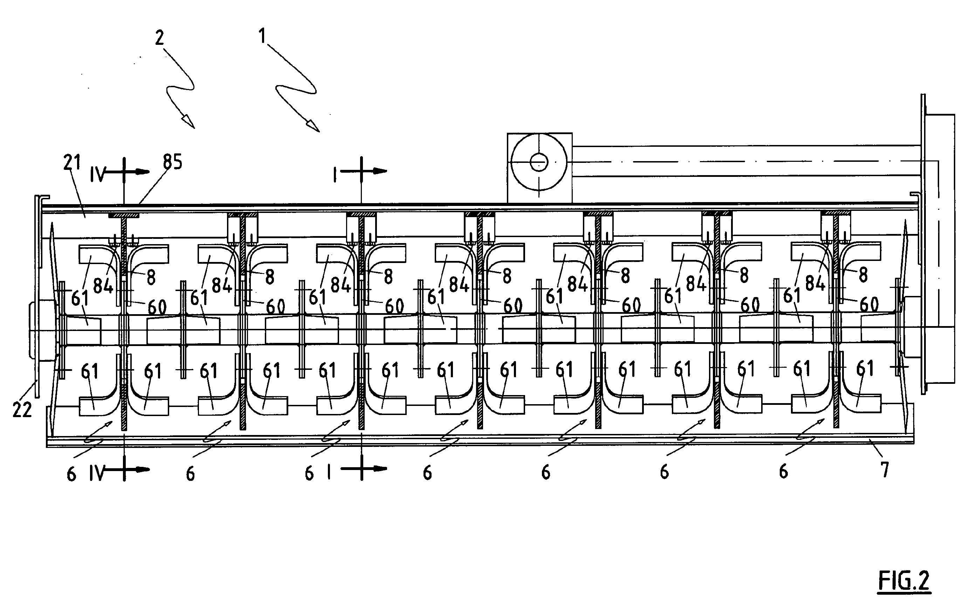

Further characteristics and advantages of the invention will emerge from a reading of the following description which is provided by way of non-limiting example, with the aid of the figures illustrated in the accompanying drawings. Figure 1 is a lateral view of a work machine of a first embodiment of the invention, sectioned along plane I-I of figure 2.
Figure 2 is a section along line II-II of figure 1.
Figure 3 is a section along line III-III of figure 1.
Figure 4 is a section along line IV-IV of figure 2.
Figure 5 is a schematic lateral view of an agricultural hoe equipped with a work machine in a second embodiment of the invention.

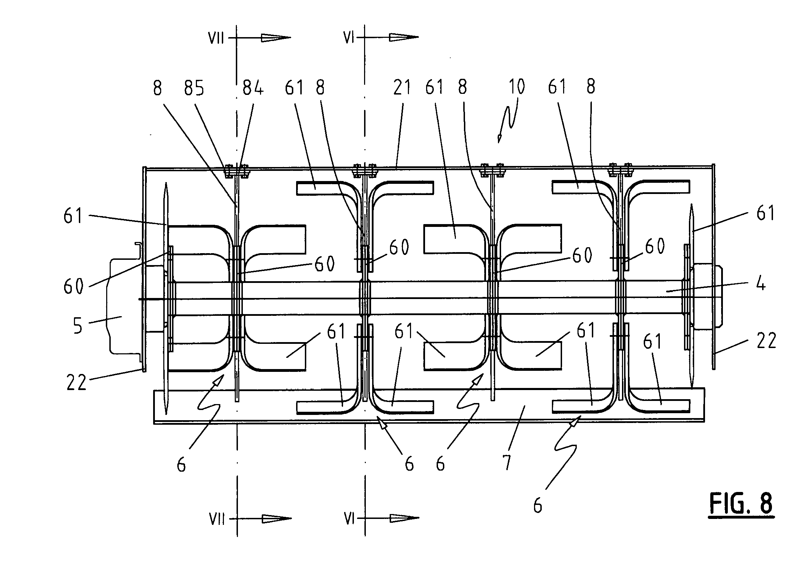

Figure 6 is a lateral view of the work machine of figure 5, sectioned along plane VI-VI of figure 8.

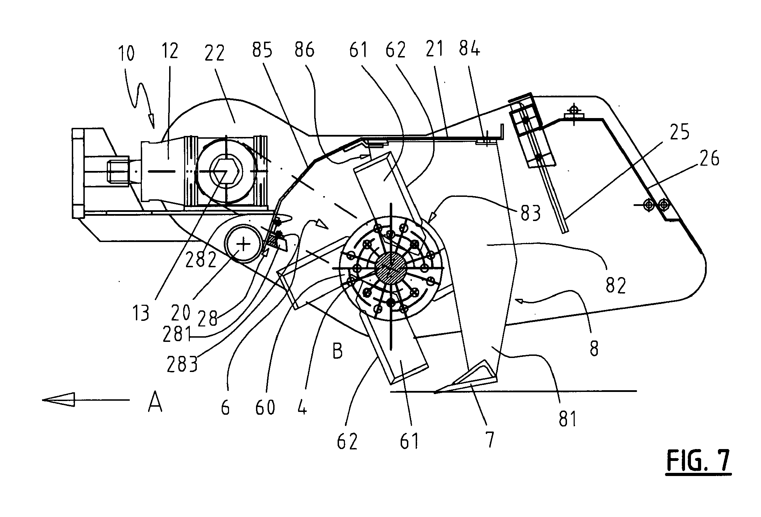

Figure 7 is section VII-VII of figure 8.
Figure 8 is section VIII-VIII of figure 6.

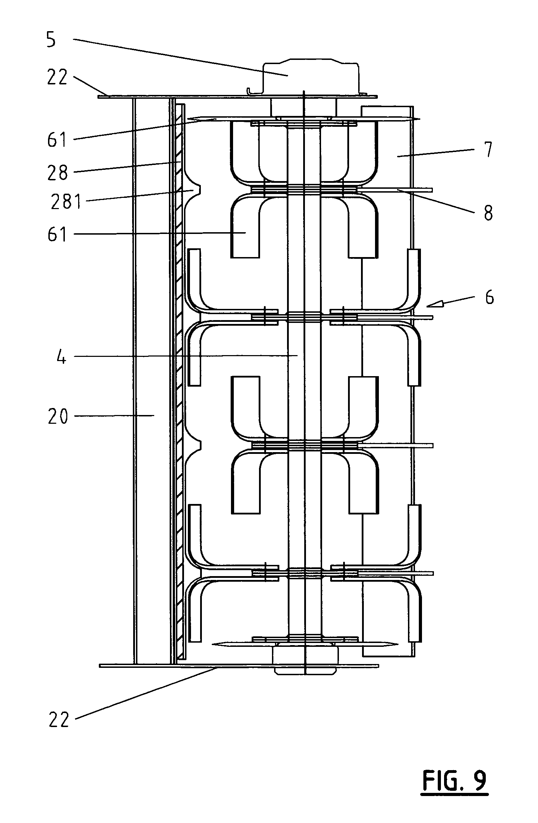

Figure 9 is section IX-IX of figure 6.

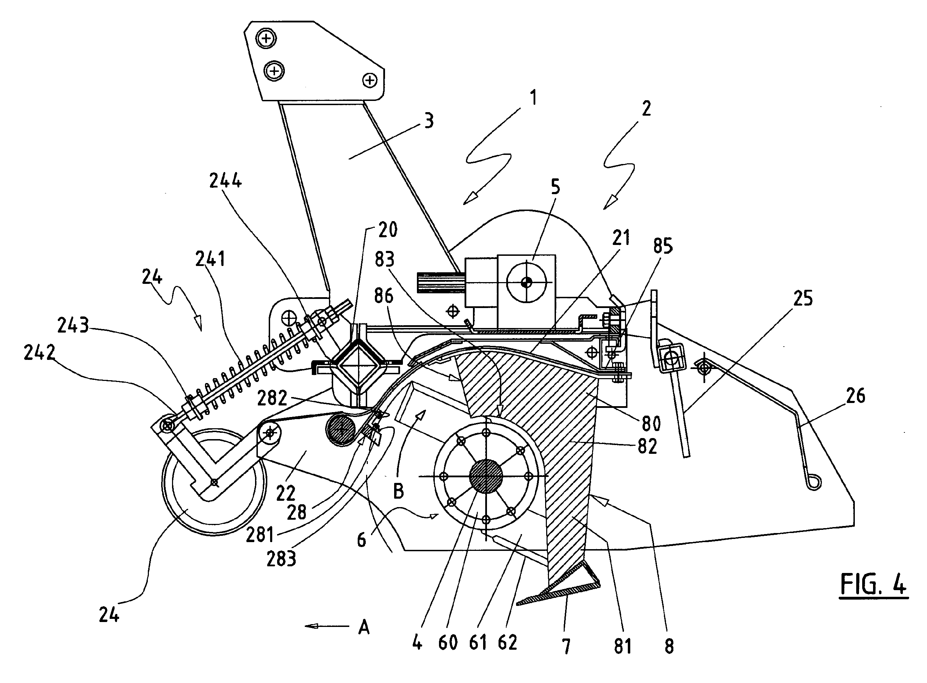

Figures 1-4 illustrate a work machine 1 for treatment of bedding in bird farming, which is predisposed to be mounted on board a tractor or a similar agricultural vehicle.

The normal advancement direction of the work machine 1 is denoted by A in figure 1.

The work machine 1 comprises a bearing structure 2 provided with coupling means 3 to a common lifting device of the tractor.

The bearing structure 2 comprises a sturdy horizontal support crossbar 20 to which a box body is fixed, preferably made of sheet steel, which comprises a cover 21 and two descending lateral flanks 22, which are respectively fixed to the opposite ends of the cover 21 (see also figure 2).

A horizontal-axis rotary shaft 4 is rotatably coupled to the lateral flanks 22, which shaft 4 is orientated transversally and is contained internally of the chamber defined by the box body of the bearing structure 2.

The rotary shaft 4 is connected to a mechanical group 5 for relaying the motion, which is mounted externally of the bearing structure 2, adjacent to a lateral flank 22, and is destined to be connected to the rear power take-off of the tractor.

The normal rotation direction of the shaft 4 is denoted by B in figure 1.

A series of identical milling tools 6 is keyed on the rotary shaft 4, each of which comprises a keying flange 60, substantially a perforated disc, which is orientated perpendicular to the rotary shaft 4 and is coaxially inserted and fixed, for example welded, thereon.

Four identical cutter blades 61 are fixed on each surface of the keying flange 60, each of which is defined by a shaped plate which lies parallel to the keying flange 60 and projects radially with respect thereto, terminating with a curved end folded parallel to the rotary shaft 4 and facing towards the opposite side of the keying flange 60.

The cutter blades 61 are singly fixed to the keying flange 60 by means of bolts and are provided with a respective cutting edge 62.

The cutter blades 61 are substantially equidistanced from one another with the relative cutting edges 62 thereof facing in a same direction, in the example in the rotation direction of the shaft 4.

Each cutter blade 61 associated to a surface of the keying flange 60 is aligned, along the direction defined by the longitudinal axis of the rotary shaft 4, to a cutter blade 61 associated to the other surface of the keying flange. Naturally the number and arrangement of the cutter blades 61 on the surfaces of the keying flange 60 can be different.

The work machine 1 further comprises a scraper blade 7, which is located in a position underlying the rotary shaft 4, slightly retracted with respect to the axis thereof, such as to be able to be in contact with the terrain without interfering with the rotation of the milling tools.

The scraper blade 7 is defined by a profiled crossbar which develops parallel to the rotary shaft 4 over a total length of about the same as the length of the rotary shaft 4 itself, and which exhibits a substantially wedge-shaped constant transversal section, with the vertex of the wedge facing in the advancement direction A (see figure 1).

As illustrated in figure 2, the scraper blade 7 is fixed to the bearing structure 2 by means of a plurality of steel plates 8, each of which is orientated perpendicular to the rotary shaft 4, and is substantially coplanar with the keying flange 60 of a respective milling tool 6, such as to develop in the hollow space comprised between the pair of fixed cutter blades 61 fixed on the opposite surfaces of the flange 60.

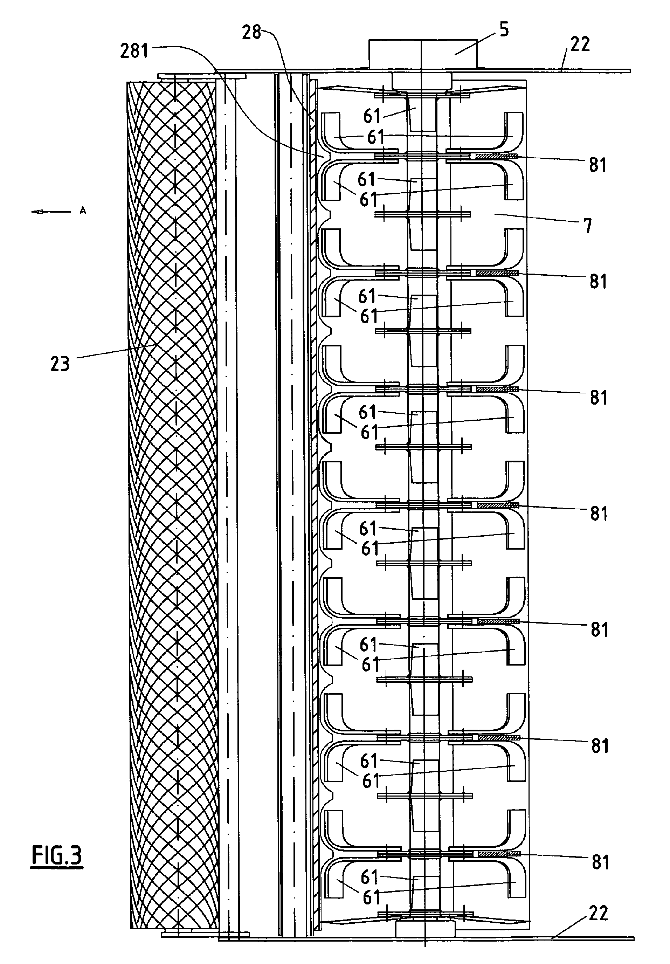

Each plate 8 is shaped such as partially to envelop the keying flange 60 of the corresponding milling tool 6 (see figure 3), and interposes between the cutter blades 61 which are fixed on the opposite surfaces of the flange 60.

In particular, it comprises a broad upper portion 80 fixed to the bearing structure 2, and a lower portion 81, narrower, which develops behind the rotary shaft 4 and is inferiorly welded to the inclined flank of the scraper blade 7. The upper portion 80 is fixed to the bearing structure 2 by means of a horizontal connector plate 84 which is welded along the upper edge of the shaped plate 8, in such a way a to give the shape plate 8 a substantially T-shaped transversal section (see figure 2).

The projecting wings of the connecting plate 84 are bolted to a respective support plate 85, which is fixed to the lower surface of the cover 21 of the bearing structure 2.

The upper portion 80 and the lower portion 81 are connected by a variable-width intermediate portion 82 having a circular profile, coaxial to the shaft 4, and having a diameter slightly greater than the diameter of the flange 60.

In this way, the upper portion 80 makes available a front edge 86, facing opposite to the rotation direction B of the milling tools 6, the radial development of which with respect to the rotation axis of the shaft goes from a minimum, which is slightly greater than the diameter of the keying flange 60, to a maximum, which is greater than the maximum diameter of the milling tool 6 defined by the ends of the radial cutter blades 61.

In particular, the front edge 86 has a straight profile which is radially oriented with respect to the rotation axis of the rotary shaft 4.

As illustrated in figures 1 and 3, the work machine 1 comprises at least a counterblade 28 which almost touches the cutter blades 61 and which is fixed to the bearing structure 2 on the opposite side of the scraper blade 7 with respect to the rotary shaft 4.

In use, the counter-blade 28 is arranged upstream of the rotary shaft 4 in the advancement direction A imparted on the work machine.

The counter-blade 28 is advantageously positioned substantially diametrically opposite the scraper blade 7 with respect to the rotary shaft 4, exhibits a longitudinal development which is substantially equal to the length of the rotary shaft, and is orientated parallel thereto.

The counter-blade 28 is fixed to the internal surface of the cover 21 by means of threaded organs (or welded), for example, bolts 282 for fastening, by means of corner centring brackets 283 or the like, the counterblade against the cover 21, maintaining the cutting profile facing towards the rotary shaft 4 and therefore the cutter blades 61.

The counter-blade 28 comprises (see figure 3) shaped appendages 281 which develop perpendicularly to the longitudinal axis thereof and which project into the hollow space between the cutter blades 61.

Each shaped appendage 281 is such as to project internally of the hollow space between two flanked cutter blades 61, as shown in figure 3.

Should it be necessary to reduce the work load on the structure of the work machine, the counter-blade 28 can be applied with shaped appendages of very contained size.

The thickness of the shaped appendages 281 (or linear counter-blade) is such that they are destined to perform a cutting action in collaboration with the cutter blades 61; in the example they have a tapered configuration which follows a same profile as the hollow space between two cutter blades 61.

As illustrated in figure 1, the work machine 1 comprises a containing roller 23 which is associated rotatably idly to the bearing structure 2 and is arranged anteriorly of the rotary shaft 4 in the advancement direction A.

The containing roller 23 has the main aim of containing the minced product which is projected forwards by the cutting blades 61 and pressing, by rolling, on the straw bedding upstream of the work machine.

The containing roller 23 develops parallel to the rotary shaft 4 substantially over the whole length thereof, and is fixed to the front part of the bearing structure 2 by means of an arm 24 which enables height-regulation thereof.

The arm 24 is substantially L-shaped, a first end of which is hinged to the bearing structure 2 and a central zone of which is hinged to the containing roller 23.

Further, elastic means 240 are also provided for thrusting the containing roller 23 towards the ground.

The elastic means 240 comprise a helix spring 241 destined to be inserted on a rod 242.

A first end of the rod 242 is hinged to the second end of the arm 24.

The end of the spring 241 proximal to the first end of the rod 242 rests on a first bushing 243 inserted on the rod which functions as an abutting element for the spring.

The distal end of the spring 241 rests on a second bushing 244, also inserted on the rod 242 and hinged to the bearing structure 2, for example in proximity of the horizontal support crossbar 20.

In this way the spring 241 keeps the roller pressed towards the ground, while at the same time it adapts to the conformation thereof following the profile and constantly resting thereon.

In the rear part of the machine 1, the bearing structure 2 supports a sift 25, for example a comb sift having parallel teeth, which is superiorly fixed to the structure 2 and exhibits a slight backwards inclination.

A sheet metal strip 26 is located posteriorly of the sift 25, which strip 26 is superiorly hinged to the bearing structure 2 such as to be able to oscillate, and has the aim of containing the minced and sifted product that is projected rearwards.

In the functioning of the work machine 1, the bearing structure 2 is rested on the bedding to be treated by means of the scraper blade 7, and is then made to advance in the advancement direction A indicated in figure 1.

The bedding is raised by the scraper blade 7 which, from the start of the advancement, rests directly on the floor.

The scraper blade 7 inserts below the bedding and raises it, making it available to the cutter blades 61 of the milling tools 6, which are located at a short distance from the ground, and rotate in an opposite direction to the advancement direction A, in the example in the clockwise direction B of figure 1.

The milling tools 6 are superiorly and laterally covered by the box body of the bearing structure 2, which retains and guides the bedding material.

In this way, the cutter blades 61 break up the bedding and launch the material of the bedding first in the advancement direction A and then upwards and finally backwards against the rear sift 25.

When the material is launched upwards, first it encounters the counter-blade 28, which exerts its first chopping and scissor-cutting actions with the cutter blades 61, cutting the straw itself. The straw, when it has passed beyond the counter-blade 28 and is directed backwards by the cutter blades 61, is already reduced into small pieces such as not to be able to clog up the box body of the bearing structure 2.

The material is thus broken up and mixed by the cutters 61, and reduced into homogeneous particles by the sift 25 such as to fall onto the ground in a soft and relatively dry form.

The action of chopping up the straw is only completed thanks to the shaped plates 8 which support the cutter blade 7, which at the same time prevent accumulation thereof around the keying flanges 60.

Thanks to these details, the work machine 1 is therefore able to treat already-formed beddings and to prepare a new bedding of fresh straw, as it is advantageously able to chop up the straw, and thus can regenerate the straw or mixed-straw bedding just like any other sawdust, rice or pineapple husk bedding, making it suitable for preventing lesions to the claws of the animals, reducing to a minimum the dust emissions in too-dry beddings, and the emission of gas in too-wet beddings, and thus satisfying the requirements of the CEE 96/61 directives for the combined prevention and control of pollution. The use of this treatment method for beddings significantly increases the animal's well-being during the whole life cycle.

Figures from 5 to 9 illustrate the invention applied to a work machine 10 for treatment of beddings for bird farming, which work machine 10 is predisposed to be coupled to a usual agricultural rotavator 100 or like work machines.

The elements that are in common with the previously-described work machine 1 are denoted using the same numerical references in the figures and are not newly described.

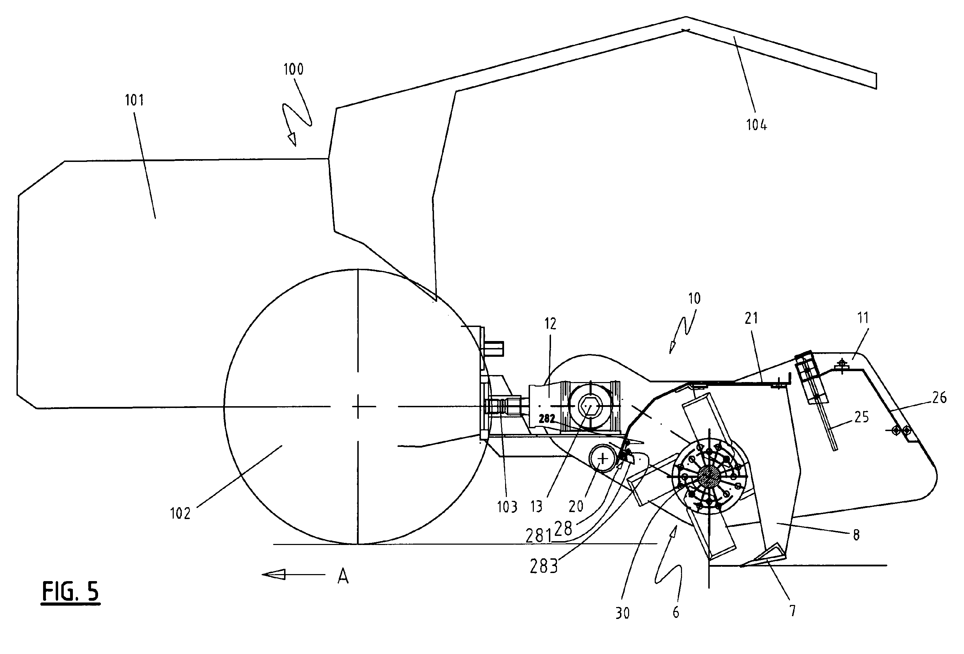

As illustrated in figure 5, a rotavator 100 schematically comprises a carriage 101 provided with support wheels 102, on board which a motor group (not visible) is installed, destined to supply the drive force to a power take-off 103 positioned in the rear part of the carriage 101. The carriage 101 is further provided with a pair of handlebars 104 which develop in a rearwards direction, and which are destined to be gripped by a user pushing the carriage 101 on the ground.

The normal advancement direction of the rotavator 100 and therefore of the work machine 10 is denoted by A in figure 5.

The work machine 10 comprises an external cover 11 made of sheet metal, internally of which a horizontal-axis rotary shaft 4 is contained, which is centrally supported by a box 12 from which a support arm 13 derives, internally hollow and destined to be removably fixed to the rear part of the rotavator 100.

A longitudinal transmission shaft (not visible) is rotatably housed in the support arm 13, which shaft is provided with coupling means with the power take-off 103 of the rotavator 100 and is destined to transmit the drive to the rotary shaft 4 through a mechanical transmission group contained in the box 12.

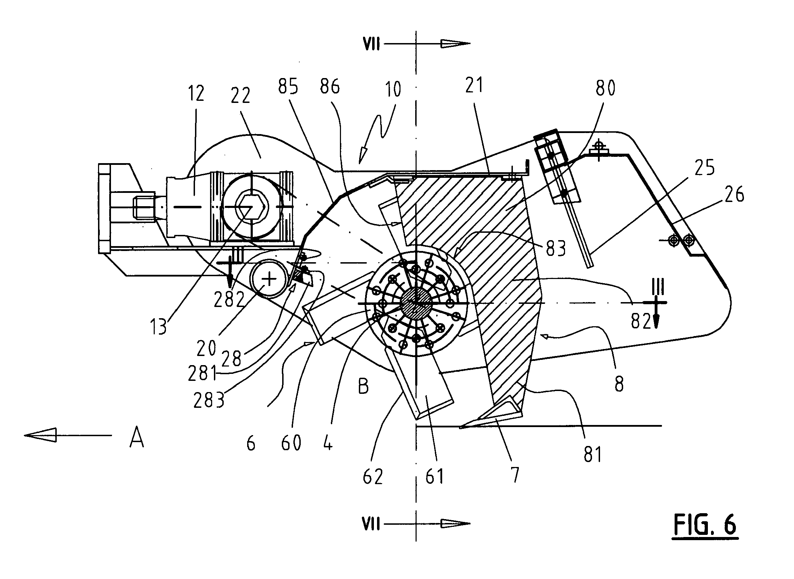

The normal rotating direction of the shaft 4 is denoted by B in figure 6. Differently to the first work machine 1, in this work machine 10 there is no use of the containing roller 23 and the relative elastic means 24.

The remaining structural elements of the work machine 10, the functioning and advantages attained thereby are alike to those previously described for the work machine for a tractor, to which detailed description reference is made here.

Obviously a technical expert in the field might make numerous modifications of a technical-applicational nature to the invention, without its forsaking the ambit of the invention as claimed herein below.

## Claims

1. A work machine for treatment of bedding in bird farms, comprising a rotary shaft (4) on which at least a milling tool (6) is keyed, a bearing 5 structure (2) destined at least partially to cover the rotary shaft (4) and the milling tool (6), and a scraper blade (7) located below the rotary shaft (4) such as to scrape and raise the material located in the zone underlying the milling tool (6), the milling tool (6) being provided with cutter blades (61) which project radially with respect to the rotary shaft (4), **characterized in that** the machine comprises at least a counter-blade (28) such as to almost touch the cutter blades (61) and being fixed to the bearing structure (2) on an opposite side to the scraper blade (7) with reference to the rotary shaft (4), the counter-blade (28) comprising shaped appendages (281) developing at least partially in the hollow space between the cutter blades (61) of the at least a milling tool (6).

2. The machine of claim 1, **characterised in that** the counter-blade (28) is positioned substantially diametrically opposite the scraper blade (7) with respect to the rotary shaft (4).

3. The machine of claim 1, **characterised in that** the counter-blade (28) exhibits a longitudinal development which is substantially equal to the length of the rotary shaft (4) and is orientated parallel thereto.

4. The machine of claim 1, **characterised in that** each of the milling tools (6) is singly provided with a keying flange (60) on opposite surfaces of which the cutter blades (61) are fastened.

5. The machine of claim 1, **characterised in that** the scraper blade (7) is fixed 25 to the bearing structure (2) by means of at least a shaped plate (8) orientated perpendicular to the rotary shaft (4) and developing in the hollow space between the cutter blades (61), on the opposite side of the counter-blade (28) with respect to the rotary shaft.

6. The machine of claim 4 and 5, **characterised in that** multiples of the milling tools (6) are keyed on the rotary shaft (4), the shaped appendages (281) and the at least a shaped plate (8) developing in the hollow space between the cutter blades (61) of one of the milling tools (6).

7. The machine of claim 5, **characterised in that** the scraper blade (7) is fixed to the bearing structure (2) by means of a plurality of the shaped plates (8), each of which develops in the hollow space between the cutter blades (61) which are fixed on the opposite surfaces of the keying flange (60) of a respective milling tool (6).

8. The machine of claim 5, **characterised in that** the thickness of the shaped appendages (281) and the shaped plate (8) is such that the shaped appendages (281) and the shaped plate (8) are destined to perform a cutting action in cooperation with the cutters (61) of the milling tool (6).

9. The machine of claim 1, **characterised in that** the rotary shaft (4) is associated to means (5) for rotating the shaft (4) in an opposite direction (B) to the advancement direction (A) of the machine on the ground.

10. The machine of claim 9, **characterised in that** it comprises a containing roller (23) rotatably associated to the bearing structure (2), arranged frontally of the rotary shaft (4) in the advancement direction (A) and developing parallel to the rotary shaft.

11. The machine of claim 10, **characterised in that** it comprises elastic mean (240) for regulating the height of the containing roller (23).

## Patentansprüche

1. Arbeitsmaschine zur Behandlung von Einstreu auf Geflügelfarmen, umfassend eine Drehwelle (4), auf der mindestens ein Zerkleinerungswerkzeug (6) festgekeilt ist, eine Tragstruktur (2), die dafür vorgesehen ist, die Drehwelle (4) und das Zerkleinerungswerkzeug (6) zumindest teilweise zu bedecken, und eine Schabklinge (7), die unterhalb der Drehwelle (4) derart angeordnet ist, dass sie das Material in der Zone, die unter dem Zerkleinerungswerkzeug (6) liegt, abschabt und anhebt, wobei das Zerkleinerungswerkzeug (6) mit Schneidklingen (61) ausgestattet ist, die in Bezug auf die Drehwelle (4) radial hervorstehen, **dadurch gekennzeichnet, dass** die Maschine mindestens eine Gegenklinge (28) derart aufweist, dass sie die Schneidklingen (61) fast berührt, und die an einer in Bezug auf die Drehwelle (4) zur Schabklinge (7) gegenüberliegenden Seite an der Tragstruktur (2) fixiert ist, wobei die Gegenklinge (28) Formfortsätze (281) aufweist, die sich zumindest teilweise in den Hohlraum zwischen den Schneidklingen (61) des mindestens einen Zerkleinerungswerkzeugs (6) erstrecken.

2. Maschine nach Anspruch 1, **dadurch gekennzeichnet, dass** die Gegenklinge (28) in Bezug auf die Drehwelle (4) im Wesentlichen diametral gegenüber der Schabklinge (7) angeordnet ist.

3. Maschine nach Anspruch 1, **dadurch gekennzeichnet, dass** die Gegenklinge (28) eine Längserstreckung aufweist, die im Wesentlichen gleich der Länge der Drehwelle (4) ist und parallel zu dieser ausgerichtet ist.

4. Maschine nach Anspruch 1, **dadurch gekennzeichnet, dass** jedes der Zerkleinerungswerkzeuge (6) einzeln mit einem Festkeilflansch (60) ausgestattet sind, an dessen gegenüberliegenden Seiten die Schneidklingen (61) befestigt sind.

5. Maschine nach Anspruch 1, **dadurch gekennzeichnet, dass** die Schabklinge (7) an der Tragstruktur (2) mit Hilfe mindestens einer Formplatte (8) fixiert ist, die senkrecht zur Drehwelle (4) ausgerichtet ist und sich auf der in Bezug auf die Drehwelle (4) gegenüberliegenden Seite der Gegenklinge (28) in den Hohlraum zwischen den Schneidklingen (61) erstreckt.

6. Maschine nach Anspruch 4 und 5, **dadurch gekennzeichnet, dass** mehrere der Zerkleinerungswerkzeuge (6) an der Drehwelle (4) festgekeilt sind, wobei sich die Formfortsätze (281) und die mindestens eine Formplatte (8) in den Hohlraum zwischen den Schneidklingen (61) eines der Zerkleinerungswerkzeuge (6) erstrecken.

7. Maschine nach Anspruch 5, **dadurch gekennzeichnet, dass** die Schabklinge (7) an der Tragstruktur (2) mit Hilfe von mehreren der Formplatten (8) befestigt ist, von denen sich jede in den Hohlraum zwischen den Schneidklingen (61) erstreckt, die an den gegenüberliegenden Oberflächen des Festkeilflansches (60) eines jeweiligen Zerkleinerungswerkzeugs (6) fixiert sind.

8. Maschine nach Anspruch 5, **dadurch gekennzeichnet, dass** die Dicke der Formfortsätze (281) und der Formplatte (8) derart ist, dass die Formfortsätze (281) und die Formplatte (8) dafür vorgesehen sind, in Zusammenwirkung mit den Schneidklingen (61) des Zerkleinerungswerkzeugs (6) einen Schneidvorgang auszuführen.

9. Maschine nach Anspruch 1, **dadurch gekennzeichnet, dass** die Drehwelle (4) mit Mitteln (5) zum Drehen der Welle (4) in eine zur Richtung des Vorrückens (A) der Maschine auf dem Boden entgegengesetzte Richtung (B) verbunden ist.

10. Maschine nach Anspruch 9, **dadurch gekennzeichnet, dass** sie eine Behälterwalze (23) umfasst, die drehbar mit der Tragstruktur (2) verbunden und in der Richtung des Vorrückens (A) an der Vorderseite der Drehwelle (4) angeordnet ist und sich parallel zur Drehwelle erstreckt.

11. Maschine nach Anspruch 10, **dadurch gekennzeichnet, dass** sie ein elastisches Mittel (240) zur Regulierung der Höhe der Behälterwalze (23) umfasst.

## Revendications

1. Machine de travail pour le traitement de litières dans des exploitations avicoles, comprenant un arbre rotatif (4) sur lequel est claveté au moins un outil de broyage (6), une structure de support (2) destinée à couvrir au moins partiellement l'arbre rotatif (4) et l'outil de broyage (6), et une lame de raclage (7) située en dessous de l'arbre rotatif (4) de façon à racler et relever le matériau situé dans la zone se trouvant sous l'outil de broyage (6), l'outil de broyage (6) étant pourvu de lames de coupe (61) qui se projettent radialement par rapport à l'arbre rotatif (4), **caractérisée en ce que** la machine comprend au moins une contre-lame (28) qui touche pratiquement les lames de coupe (61) et est fixée à la structure de support (2) sur un côté opposé à la lame de raclage (7) par rapport à l'arbre rotatif (4), la contre-lame (28) comprenant des appendices conformés (281) qui se développent au moins partiellement dans l'espace creux compris entre les lames de coupe (61) de l'au moins un outil de broyage (6).

2. Machine selon la revendication 1, **caractérisée en ce que** la contre-lame (28) est positionnée sensiblement du côté diamétralement opposé à la lame de raclage (7) par rapport à l'arbre rotatif (4).

3. Machine selon la revendication 1, **caractérisée en ce que** la contre-lame (28) présente un développement longitudinal sensiblement égal à la longueur de l'arbre rotatif (4) et est orientée parallèlement à celui-ci.

4. Machine selon la revendication 1, **caractérisée en ce que** chacun des outils de broyage (6) est pourvu individuellement d'une bride de clavetage (60) sur des surfaces opposées à celles auxquelles les lames de coupe (61) sont fixées.

5. Machine selon la revendication 1, **caractérisée en ce que** la lame de raclage (7) est fixée à la structure de support (2) à l'aide d'au moins une plaque conformée (8) orientée perpendiculairement à l'arbre rotatif (4) et se développant dans l'espace creux entre les lames de coupe (61), sur le côté de la contre-lame (28) opposé à l'arbre rotatif.

6. Machine selon les revendications 4 et 5, **caractérisée en ce que** des outils de broyage multiples (6) sont clavetés sur l'arbre rotatif (4), les appendices conformés (281) et l'au moins une plaque conformée (8) se développant dans l'espace creux compris entre les lames de coupe (61) d'un des outils de broyage (6).

7. Machine selon la revendication 5, **caractérisée en ce que** la lame de raclage (7) est fixée à la structure de support (2) à l'aide d'une pluralité de plaques conformées (8) qui se développent chacune dans l'espace creux entre les lames de coupe (61) qui sont fixées sur les surfaces opposées de la bride de clavetage (60) d'un outil de broyage respectif (6).

8. Machine selon la revendication 5, **caractérisée en ce que** l'épaisseur des appendices conformés (281) et de la plaque conformée (8) est telle que les appendices conformés (281) et la plaque conformée (8) sont destinés à mettre en oeuvre une action de coupe conjointement aux couteaux (61) de l'outil de broyage (6).

9. Machine selon la revendication 1, **caractérisée en ce que** l'arbre rotatif (4) est associé à un moyen de rotation (5) pour faire tourner l'arbre (4) en direction opposée (B) à la direction d'avancement (A) de la machine sur le sol.

10. Machine selon la revendication 9, **caractérisée en ce qu'**elle comprend un rouleau conteneur (23) associé de manière rotative à la structure de support (2), agencé frontalement par rapport à l'arbre rotatif (4) dans la direction d'avancement (A) et se développant parallèlement à l'arbre rotatif.

11. Machine selon la revendication 10, **caractérisée en ce qu'**elle comprend un moyen élastique (240) pour réguler la hauteur du rouleau conteneur (23).
